# EUROPEAN PATENT APPLICATION

(11) **EP 4 693 911 A1**
(43) Date of publication of application: **11.02.2026**
(21) Application number: 24792901.1
(22) Date of filing: 04.04.2024
(51) Int. Cl.: H04B 1/401, H04B 7/0413, H04W 8/18, H04W 8/24, H04W 28/02, H04W 48/18, H04W 76/27, H04W 88/06, H04B 1/04

(54) **ELECTRONIC DEVICE FOR SUPPORTING PLURALITY OF SUBSCRIBER INDENTITY MODULES AND OPERATION METHOD THEREOF**

(30) Priority: 18.04.2023 KR 20230050889; 19.05.2023 KR 20230065208
(71) Applicant: Samsung Electronics Co., Ltd., Suwon-si, Gyeonggi-do 16677 (KR)
(72) Inventor: LEE, Yunbeom, Suwon-si Gyeonggi-do 16677 (KR); KO, Heeseok, Suwon-si Gyeonggi-do 16677 (KR); KIM, Jongyul, Suwon-si Gyeonggi-do 16677 (KR); JUNG, Joonyoung, Suwon-si Gyeonggi-do 16677 (KR)
(74) Representative: Nederlandsch Octrooibureau
(86) International application number: PCT/KR2024/004380
(87) International publication number: WO 2024/219715

(57) **Abstract**

According to an embodiment, an electronic device may comprise: at least one communication processor connected to a first SIM and a second SIM; and an RF circuit configured to process an RF signal on the basis of a signal from the at least one communication processor. The at least one communication processor may be configured to: receive a first message associated with an UL MIMO mode from a first network corresponding to the first SIM; receive a second message associated with an UL SISO mode from a second network corresponding to the second SIM; on the basis of the received first message and the second message, identify whether or not a first transmission path configured for the first SIM and a second transmission path configured for the second SIM satisfy a first condition; and on the basis of identifying that the first transmission path and the second transmission path do not satisfy the first condition, control the RF circuit to refrain from performing a first operation associated with changing an RAT for the second SIM and/or control the RF circuit to transmit an UL signal associated with the first SIM on the basis of the UL MIMO mode. Other various embodiments are possible.

## Description

### [Technical Field]

An embodiment of the disclosure relates to an electronic device supporting a plurality of subscriber identity modules (SIMs) and an operating method thereof.

### [Background Art]

In a wireless communication system, an electronic device (e.g., a user equipment (UE)) may access a wireless communication network and use a voice communication service or a data communication service at a fixed location or while moving. To provide the electronic device with the communication service, a suitable authenticating process is required. A universal integrated circuit card (UICC) is inserted into the electronic device, and authentication is performed between the electronic device and a server of a mobile network operator (MNO) which is a communication provider via a universal subscriber identity module (USIM) installed in the UICC. The UICC may be called a subscriber identity module (SIM) card in a global system for mobile communications (GSM) scheme and may be called a universal subscriber identity module (USIM) card in a wideband code division multiple access (WCDMA), and long term evolution (LTE) schemes. The USIM card or the SIM card may exist in an independent UICC form, in an embedded form (e.g., an embedded SIM (eSIM)) in the electronic device, or in an integrated form (e.g., an integrated SIM (iSIM)) in at least one of chips included in the electronic device.

If a user of the electronic device subscribes to a wireless communication service provided by the communication provider, the communication provider may provide the user with a UICC (e.g., a SIM card or a USIM card), and the user may insert the provided UICC into the electronic device of the user. According to an embodiment, if the user of the electronic device subscribes to the wireless communication service provided by the communication provider, information to be stored in the UICC (e.g., an eSIM card or an iSIM card) included in the electronic device may be received from the communication provider. If the UICC is inserted into the electronic device or the information to be stored in the UICC is received from the communication provider, a USIM application installed in the UICC may be executed, and the suitable authenticating process may be performed using an encryption key value for authentication and an international mobile subscriber identity (IMSI) value stored in the UICC, with the server of the communication provider at which the same IMSI value and encryption key value are stored. After the suitable authenticating process is performed, the wireless communication service may be used.

When information related to the SIM is provided to the UICC (e.g., the eSIM or the iSIM) mounted on the electronic device from the server of the communication service provider, the suitable authenticating process may be performed with the server of the communication provider at which the same IMSI value and encryption key are stored, using an international mobile subscriber identity (IMSI) value and encryption key value for the authentication which are included in the information related to the SIM or may be generated via the information related to the SIM. After the suitable authenticating process is performed, the wireless communication service may be used.

The electronic device may support two or more SIMs, and this may be referred to as a dual SIM electronic device or a multi-SIM electronic device. A case that two or more SIM cards are mounted on the electronic device may mean a case that two or more independent UICCs are configured in the electronic device. Alternatively, the case that the two or more SIM cards are mounted on the electronic device may mean a case that at least one removable SIM (rSIM) and the at least one eSIM card are included in the electronic device. Alternatively, the case that the two or more SIM cards are mounted on the electronic device may mean a case that at least one rSIM and at least one iSIM card are included in the electronic device. Alternatively, the case that the two or more SIM cards are mounted on the electronic device may mean a case that an eSIM card or an iSIM card which supports at least two networks is configured in the electronic device. The dual SIM electronic device or multi-SIM electronic device may support a plurality of SIMs and each SIM may be associated with different subscription. A mode in which one transceiver transmits and receives signals associated with a plurality of SIMs may be referred to as a dual SIM dual standby (DSDS) mode. In this case, if any one of the SIMs transmits or receives a signal, another SIM may exist in a standby state. Alternatively, a mode in which the two SIMs may be simultaneously activated may be referred to as a dual SIM dual active (DSDA) mode.

### [Disclosure]

### [Technical Solution]

According to an embodiment of the disclosure, an electronic device may comprise at least one communication processor configured to be connected to a first subscriber identity module (SIM) and a second SIM, a radio frequency (RF) circuit, and memory (130) storing instructions.

According to an embodiment of the disclosure, the instructions, when executed by the at least one communication processor, cause the electronic device to receive a first message associated with an uplink (UL) multiple-input multiple-output (MIMO) mode from a first network corresponding to the first SIM.

According to an embodiment of the disclosure, the instructions, when executed by the at least one communication processor, cause the electronic device to receive a second message associated with a UL single-input single-output (SISO) mode from a second network corresponding to the second SIM.

According to an embodiment of the disclosure, the instructions, when executed by the at least one communication processor, cause the electronic device to, based on the received first message and second message, identify whether a first transmission path set for the first SIM and a second transmission path set for the second SIM satisfy a first condition.

According to an embodiment of the disclosure, the instructions, when executed by the at least one communication processor, cause the electronic device to, based on identifying that the first transmission path and the second transmission path do not satisfy the first condition, control the RF circuit to refrain from performing a first operation associated with a change of a radio access technology (RAT) for the second SIM, and/or control the RF circuit to transmit a UL signal associated with the first SIM based on the UL MIMO mode.

According to an embodiment of the disclosure, a method may comprise receiving a first message associated with an uplink (UL) multiple-input multiple-output (MIMO) mode from a first network corresponding to a first subscriber identity module (SIM).

According to an embodiment of the disclosure, the method may comprise receiving a second message associated with a UL single-input single-output (SISO) mode from a second network corresponding to a second SIM.

According to an embodiment of the disclosure, the method may comprise, based on the received first message and second message, identifying whether a first transmission path set for the first SIM and a second transmission path set for the second SIM satisfy a first condition.

According to an embodiment of the disclosure, the method may comprise, based on identifying that the first transmission path and the second transmission path do not satisfy the first condition, controlling a radio frequency (RF) circuit to refrain from performing a first operation associated with a change of a radio access technology (RAT) for the second SIM, and/or controlling the RF circuit to transmit a UL signal associated with the first SIM based on a UL MIMO mode.

According to an embodiment of the disclosure, a storage medium storing at least one computer-readable instruction may be provided.

According to an embodiment of the disclosure, the at least one instruction, when executed by at least one communication processor (120; 212; 214; 260; 310) of an electronic device (101), may cause the electronic device to perform at least one operation.

According to an embodiment of the disclosure, the at least one operation may comprise an operation of receiving a first message associated with an uplink (UL) multiple-input multiple-output (MIMO) mode from a first network corresponding to a first subscriber identity module (SIM).

According to an embodiment of the disclosure, the at least one operation may comprise an operation of receiving a second message associated with a UL single-input single-output (SISO) mode from a second network corresponding to a second SIM.

According to an embodiment of the disclosure, the at least one operation may comprise an operation of, based on the received first message and second message, identifying whether a first transmission path set for the first SIM and a second transmission path set for the second SIM satisfy a first condition.

According to an embodiment of the disclosure, the at least one operation may comprise an operation of, based on identifying that the first transmission path and the second transmission path do not satisfy the first condition, controlling a radio frequency (RF) circuit to refrain from performing a first operation associated with a change of a radio access technology (RAT) for the second SIM, and/or controlling the RF circuit to transmit a UL signal associated with the first SIM based on a UL MIMO mode.

### [Description of Drawings]

FIG. 1A is a block diagram illustrating an electronic device in a network environment according to an embodiment.
FIG. 1B is a diagram illustrating a network environment including an electronic device according to an embodiment.
FIG. 2A is a block diagram illustrating an electronic device for supporting a legacy network communication and a 5G network communication according to an embodiment.
FIG. 2B is a block diagram illustrating an electronic device for supporting a legacy network communication and a 5G network communication according to an embodiment.
FIG. 3 illustrates a block diagram illustrating an electronic device including a plurality of RF paths according to an embodiment.
FIG. 4 illustrates a flowchart illustrating an operating method of an electronic device according to an embodiment.
FIG. 5A is a diagram for explaining an operation based on a DSDA mode of an electronic device according to an embodiment.
FIG. 5B is a diagram for explaining an operation based on a DSDA mode of an electronic device according to an embodiment.
FIG. 6 illustrates a flow chart of an operating method of an electronic device according to an embodiment.
FIG. 7 illustrates a flow chart of an operating method of an electronic device according to an embodiment.
FIG. 8 is a diagram for explaining an operation of identifying an increase in a block error rate of an electronic device according to an embodiment.
FIG. 9 illustrates a flow chart of an operating method of an electronic device according to an embodiment.
FIG. 10 illustrates a flow chart of an operating method of an electronic device according to an embodiment.

### [Mode for Invention]

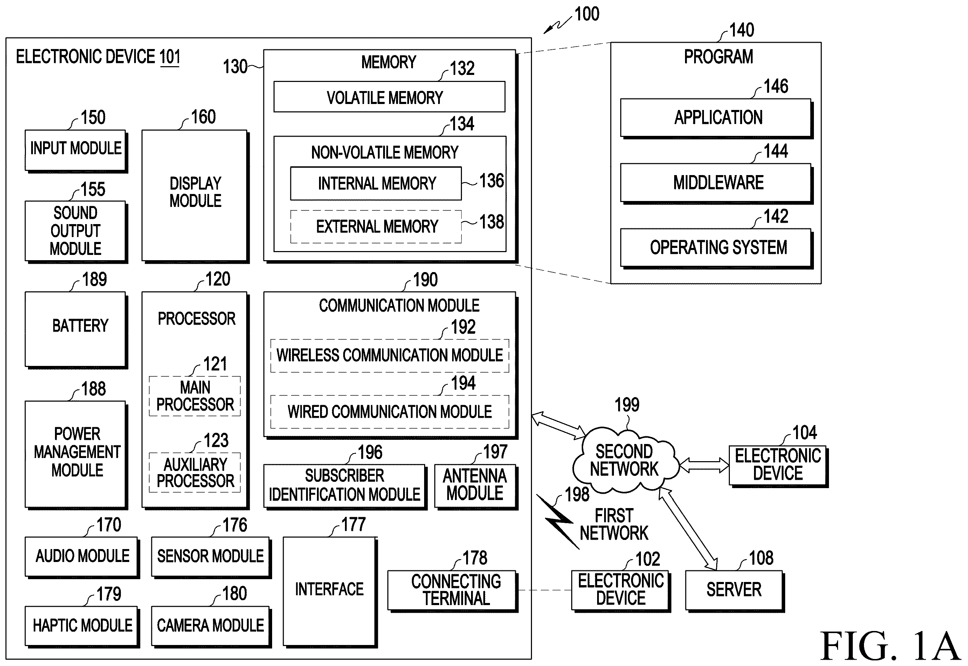

FIG. 1A is a block diagram illustrating an electronic device 101 in a network environment 100 according to embodiments. Referring to FIG. 1A, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

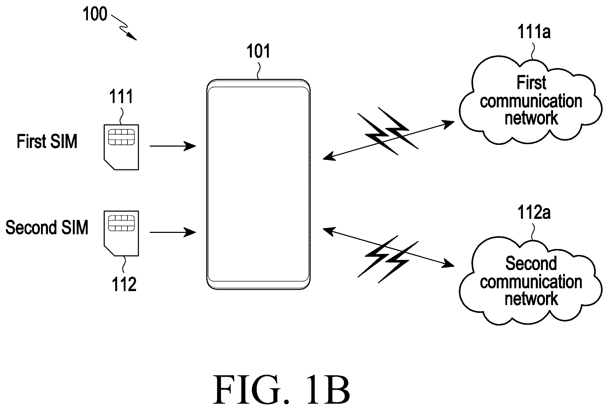

FIG. 1B is a diagram illustrating a network environment 100 including an electronic device according to various embodiments. Referring to FIG. 1B, the network 100 according to various embodiments of the disclosure may include an electronic device 101, a first communication network 111a, a second communication network 112a, or a third communication network.

According to various embodiments, the electronic device 101 may operate in a dual SIM dual standby (DSDS) mode supporting a plurality of SIMs. For example, at least two SIMs including a first SIM 111 and a second SIM 112 may be mounted on the electronic device 101. The first SIM 111 and the second SIM 112 may be removable SIMs (rSIMs). An rSIM may be a SIM that is removable from a slot provided in the electronic device 101, and there is no limitation to a form/standard of the rSIM. For example, two SIM cards may be mounted on the electronic device 101 to support the two SIMs. According to an embodiment, for convenience of a description, the first SIM 111 and the second SIM 112 are illustrated as SIM cards, but are not limited thereto. For example, one of the first SIM 111 or the second SIM 112 may be an embedded SIM (eSIM) or an integrated SIM (iSIM). Hereinafter, for convenience of a description, the SIM card will be referred to as an SIM. As illustrated in FIG. 1B, the two SIM cards including the first SIM 111 and the second SIM 112 may be mounted on the electronic device 101. The electronic device 101 may include a first slot (not shown) and a second slot (not shown) which are first structures inside the electronic device 101 for accommodating the first SIM 111 and the second SIM 112, respectively.

For example, the first SIM 111 is a SIM subscribed to a communication provider of the first communication network 111a, and the electronic device 101 may receive a wireless communication service by using the first SIM 111 to access the first communication network 111a. The second SIM 112 is a SIM subscribed to a communication provider of the second communication network 112a, and the electronic device 101 may receive a wireless communication service by using the second SIM 112 to access the second communication network 112a. The first communication network 111a and the second communication network 112a may be provided by the same communication provider or by different communication providers, respectively. If the first communication network 111a and the second communication network 112a are provided by the same communication provider, the first communication network 111a and the second communication network 112a may mean the same network. Alternatively, the different communication providers may share a communication network. For example, the first communication provider may use the first communication network 111a, and the second communication provider may also be set to use the first communication network 111a. According to an embodiment, although not shown, it will be easily understood by those skilled in the art that the electronic device 101 may further include at least one SIM, and there may be no limitation to the number or type of SIMs which the electronic device 101 further includes.

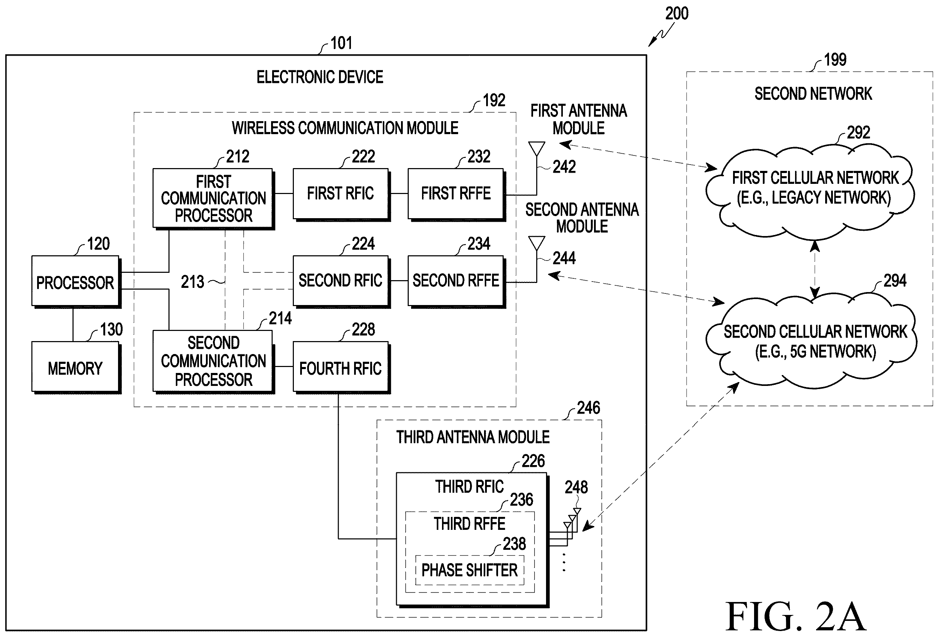

FIG. 2A is a block diagram 200 illustrating an electronic device 101 for supporting a legacy network communication and a 5G network communication according to an embodiment. Referring to FIG. 2A, an electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 244, and antennas 248. The electronic device 101 may further include a processor 120 and a memory 130. A second network 199 may include a first cellular network 292 and a second cellular network 294. According to another embodiment, the electronic device 101 may further include at least one of the components illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of a wireless communication module 192. According to another embodiment, the fourth RFIC 228 may be omitted or included as part of the third RFIC 226.

The first communication processor 212 may establish a communication channel in a band to be used for a wireless communication with the first cellular network 292 and support a legacy network communication via the established communication channel. According to embodiments, the first cellular network 292 may be a legacy network including a 2^{nd} generation (2G), 3G, 4G, or long term evolution (LTE) network. The second communication processor 214 may establish a communication channel corresponding to a specified band (e.g., about 6GHz to about 60GHz) out of a band to be used for a wireless communication with the second cellular network 294 and support a 5G network communication via the established communication channel. According to embodiments, the second cellular network 294 may be a 5G network defined by 3GPP. Further, according to an embodiment, the first communication processor 212 or the second communication processor 214 may establish a communication channel corresponding to another specified band (e.g., about 6GHz or less) out of the band to be used for the wireless communication with the second cellular network 294 and support a 5G network communication via the established communication channel.

The first communication processor 212 may transmit and receive data to and from the second communication processor 214. For example, data supposed to be transmitted via the second cellular network 294 may be scheduled to be transmitted via the first cellular network 292. In this case, the first communication processor 212 may receive transmission data from the second communication processor 214. For example, the first communication processor 212 may transmit and receive data to and from the second communication processor 214 via an inter-processor interface 213. The inter-processor interface 213 may be implemented as, for example, a universal asynchronous receiver/transmitter (UART) (e.g., high speed-UART (HS-UART)) interface or a peripheral component interconnect bus express (PCIe) interface, but a type thereof is not limited. Alternatively, the first communication processor 212 and the second communication processor 214 may exchange control information and packet data information using, for example, a shared memory. The first communication processor 212 may transmit and receive various pieces of information such as sensing information, information about output strength, and resource block (RB) allocation information to and from the second communication processor 214.

Depending on implementation, the first communication processor 212 may not be coupled directly to the second communication processor 214. In this case, the first communication processor 212 may transmit and receive data to and from the second communication processor 214 via the processor 120 (e.g., an application processor). For example, the first communication processor 212 and the second communication processor 214 may transmit and receive data to and from the processor 120 (e.g., an application processor) via an HS-UART interface or a PCIe interface, but a type of an interface is not limited. Alternatively, the first communication processor 212 and the second communication processor 214 may exchange control information and packet data information by using, for example, the processor 120 (e.g., the application processor) and the shared memory.

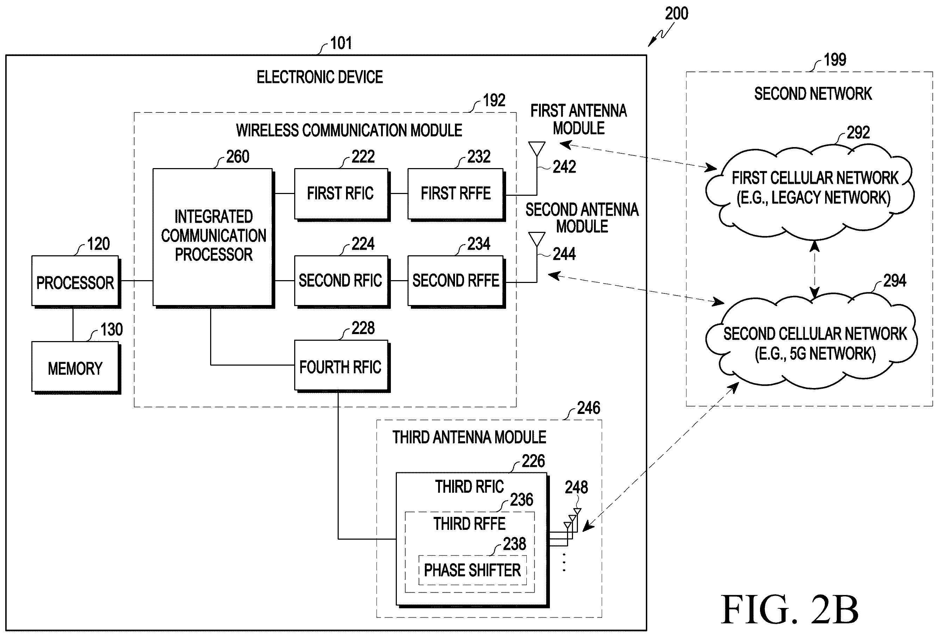

According to an embodiment, the first communication processor 212 and the second communication processor 214 may be incorporated in a single chip or a single package. According to an embodiment, the first communication processor 212 or the second communication processor 214 may be incorporated together with the processor 120, an auxiliary processor 123, or a communication module 190 in a single chip or a single package. For example, as in FIG. 2B, an integrated communication processor 260 may support a function for communicating with both the first cellular network 292 and the second cellular network 294.

As described above, at least one of the processor 120, the first communication processor 212, the second communication processor 214, or the integrated communication processor 260 may be implemented as a single chip or a single package. In this case, the single chip or single package may also include memory (or storage means) which stores an instruction which causes at least some of operations performed according to embodiments to be performed, and processing circuitry (or, the name thereof is not limited, such as an arithmetic circuit) for executing the instruction.

For transmission, the first RFIC 222 may convert a baseband signal generated by the first communication processor 212 to a radio frequency (RF) signal in about 700MHz to about 3GHz used in the first cellular network 292 (e.g., the legacy network). For reception, an RF signal may be obtained from the first network 292 (e.g., a legacy network) via an antenna (e.g., the first antenna module 242) and pre-processed via an RFFE (e.g., the first RFFE 232). The first RFIC 222 may convert the pre-processed RF signal to a baseband signal so that the baseband signal may be processed by the first communication processor 212.

For transmission, the second RFIC 224 may convert a baseband signal generated by the first communication processor 212 or the second communication processor 214 to an RF signal in a Sub6 band (e.g., about 6GHz or less) used in the second cellular network 294 (e.g., the 5G network). For reception, a 5G Sub6 RF signal may be obtained from the second cellular network 294 (e.g., the 5G network) via an antenna (e.g., the second antenna module 244) and pre-processed in an RFFE (e.g., the second RFFE 234). The second RFIC 224 may convert the pre-processed 5G Sub6 RF signal to a baseband signal so that the baseband signal may be processed by a corresponding one between the first communication processor 212 and the second communication processor 214.

For transmission, the third RFIC 226 may convert a baseband signal generated by the second communication processor 214 to an RF signal (hereinafter, referred to as, a 5G Above6 RF signal) in a 5G Above6 band (e.g., about 6GHz to about 60GHz) to be used in the second cellular network 294 (e.g., the 5G network). For reception, a 5G Above6 RF signal may be obtained from the second cellular network 294 (e.g., the 5G network) via an antenna (e.g., the antenna 248) and pre-processed via the third RFFE 236. The third RFIC 226 may convert the pre-processed 5G Above6 RF signal to a baseband signal so that the baseband signal may be processed by the second communication processor 214. According to an embodiment, the third RFFE 236 may be formed as part of the third RFIC 226.

According to an embodiment, the electronic device 101 may include the fourth RFIC 228 separately from or as part of the third RFIC 226. In this case, the fourth RFIC 228 may convert a baseband signal generated by the second communication processor 214 to an RF signal in an intermediate frequency band (e.g., about 9GHz to about 11GHz) (hereinafter, referred to as an IF signal), and provide the IF signal to the third RFIC 226. The third RFIC 226 may convert the IF signal to a 5G Above6 RF signal. During reception, a 5G Above6 RF signal may be received from the second cellular network 294 (e.g., the 5G network) via an antenna (e.g., the antenna 248) and converted to an IF signal by the third RFIC 226. The fourth RFIC 228 may convert the IF signal to a baseband signal so that the baseband signal may be processed by the second communication processor 214.

According to an embodiment, the first RFIC 222 and the second RFIC 224 may be implemented as at least part of a single chip or a single package. According to an embodiment, if the first RFIC 222 and the second RFIC 224 are implemented as a single chip or a single package in FIG. 2A or 2B, the first RFIC 222 and the second RFIC 224 may be implemented as an integrated RFIC. In this case, the integrated RFIC is connected to the first RFFE 232 and the second RFFE 234, so the integrated RFIC may convert a baseband signal into a signal of a band supported by the first RFFE 232 and/or the second RFFE 234, and transfer the converted signal to one of the first RFFE 232 and the second RFFE 234. According to an embodiment, the first RFFE 232 and the second RFFE 234 may be implemented as at least part of a single chip or a single package. According to an embodiment, at least one of the first antenna module 242 or the second antenna module 244 may be omitted or combined with the other antenna module to process RF signals in a plurality of corresponding bands.

According to an embodiment, the third RFIC 226 and the antenna 248 may be arranged on the same substrate to form a third antenna module 246. For example, the wireless communication module 192 or the processor 120 may be arranged on a first substrate (e.g., a main PCB). In this case, the third RFIC 226 may be arranged in a partial area (e.g., the bottom surface) of a second substrate (e.g., a sub PCB) other than the first substrate and the antenna 248 may be arranged in another partial area (e.g., the top surface) of the second substrate, to form the third antenna module 246. As the third RFIC 226 and the antenna 248 are arranged on the same substrate, it is possible to reduce length of a transmission line between the third RFIC 226 and the antenna 248. This may reduce, for example, amount of loss (e.g., attenuation) of a high frequency band (e.g., about 6GHz to about 60GHz) signal used for a 5G network communication due to the transmission line may be reduced. Therefore, the electronic device 101 may increase quality or a speed of a communication with the second cellular network 294 (e.g., the 5G network).

According to an embodiment, the antenna 248 may be formed as an antenna array including a plurality of antenna elements which may be used for beamforming. In this case, the third RFIC 226 may include a plurality of phase shifters 238 corresponding to the plurality of antenna elements, for example, as part of the third RFFE 236. During transmission, each of the plurality of phase shifters 238 may change a phase of a 5G Above6 RF signal to be transmitted to the outside of the electronic device 101 (e.g., a base station in the 5G network) via a corresponding antenna element. During reception, each of the phase shifters 238 may change a phase of a 5G Above6 RF signal received from the outside via a corresponding antenna element to the same or substantially same phase. This enables transmission or reception via beamforming between the electronic device 101 and the outside.

The second cellular network 294 (e.g., the 5G network) may be operated independently of (e.g., Stand-Alone (SA)) or may be connected to and operated with (e.g., Non-Stand alone (NSA)) the first cellular network 292 (e.g., the legacy network). For example, in the 5G network, only an access network (e.g., a 5G radio access network (RAN) or next generation RAN (NG RAN)) may exist, and a core network (e.g., a next generation core (NGC)) may not exist. In this case, after accessing the access network of the 5G network, the electronic device 101 may access an external network (e.g., an Internet) under the control of a core network (e.g., an evolved packed core (EPC)) of the legacy network. Protocol information for a communication with the legacy network (e.g., LTE protocol information) and protocol information for a communication with the 5G network (e.g., New Radio (NR) protocol information) may be stored in the memory 230 and accessed by another component (e.g., the processor 120, the first communication processor 212, or the second communication processor 214).

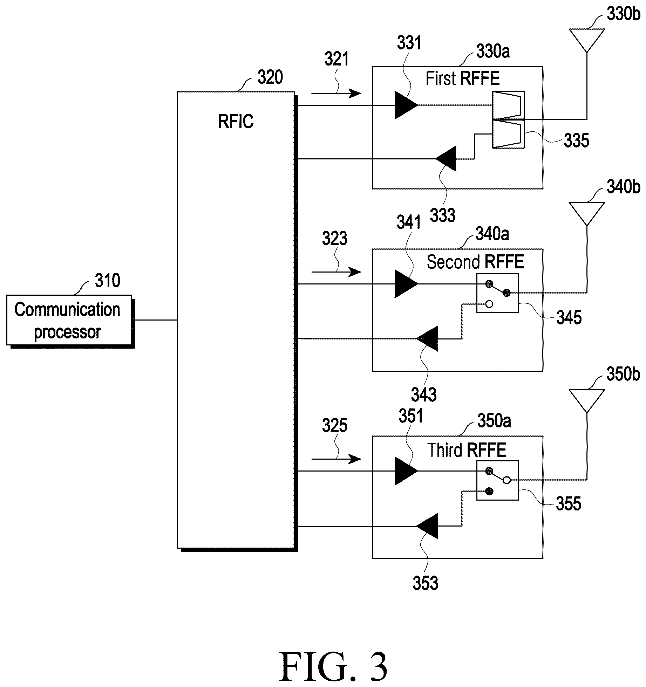

FIG. 3 illustrates a block diagram illustrating an electronic device including a plurality of RF paths according to an embodiment.

Referring to FIG. 3, in an embodiment, an electronic device (e.g., at least one of an electronic device 101 in FIG. 1A, an electronic device 101 in FIG. 1B, an electronic device 101 in FIG. 2A, or an electronic device 101 in FIG. 2B) may include at least one communication processor 310, at least one RFIC 320, a plurality of RFFEs (e.g., a first RFFE 330a, a second RFFE 340a, and a third RFFE 350a), and a plurality of antenna modules (e.g., a first antenna module 330b, a second antenna module 340b, and a third antenna module 350b). In an embodiment, the electronic device 101 may be an electronic device supporting a DSDA mode in which both SIMs may be activated simultaneously.

In an embodiment, the plurality of antenna modules (e.g., the first antenna module 330b, the second antenna module 340b, and the third antenna module 350b) may be included in at least one of an antenna module 197 in FIG. 1, a first antenna module 242, a second antenna module 244, or a third antenna module 246 in FIGS. 2A and 2B.

In an embodiment, the plurality of RFFEs (e.g., the first RFFE 330a, the second RFFE 340a, and the third RFFE 350a) may be included in at least one of a first RFFE 232, a second RFFE 234, or a third RFFE 236 in FIGS. 2A and 2B. In an embodiment, the first RFFE 330a may be configured to include a power amplifier (PA) 331, a low noise amplifier (LNA) 333, and a duplexer 335 electrically connected to the PA 331 and the LNA 333. An RF signal outputted from the RFIC 320 may be amplified by the PA 331. The RF signal amplified by the PA 331 may pass through the duplexer 335 and be transmitted to the first antenna module 330b. The LNA 333 may amplify the RF signal received by the first antenna module 330b and passed through the duplexer 335. The signal amplified by the LNA 333 may be transmitted to the RFIC 320. In an embodiment, each of the second RFFE 340a and the third RFFE 350a may be configured to include a PA (341, 351), an LNA (343, 353), and a single pole double throw (SPDT) switch (345, 355). Each of the second RFFE 340a and the third RFFE 350a may process an RF signal outputted from the RFIC 320 and/or an RF signal received by an antenna module (e.g., the second antenna module 340b or the third antenna module 350b) according to switching of the SPDT switch (345, 355).

In an embodiment, the RFIC 320 may include a plurality of RFICs, but is not limited to those illustrated in FIG. 3. For example, the RFIC 320 may include a first RFIC 222, a second RFIC 224, a third RFIC 226, and a fourth RFIC 228 in FIG. 2A or FIG. 2B. In an embodiment, the RFIC 320 may convert a baseband signal into an RF signal based on a signal received from the communication processor 310. The RFIC 320, although not illustrated in FIG. 3, may be connected to the communication processor 310 via a plurality of lines transmitting an IQ signal (quadrature signal) and at least one line transmitting a control signal.

In an embodiment, the RFIC 320 may output an RF signal via a plurality of RF paths. In an embodiment, the RFIC 320 may output an RF signal of a UHB via at least one of the plurality of RF paths. The UHB may include an N77 band of about 3.3 GHz to about 4.2 GHz, an N78 band of about 3.3 GHz to about 3.8 GHz, and an N79 band of about 4.4 GHz to about 5 GHz. The RFIC 320 may output an RF signal of a low-band (LB), a mid-band (MB), or a high-band (HB) via at least one of the plurality of RF paths. For example, the LB may be about 700 MHz to about 900 MHz, the MB may be about 1.4 GHz to about 2.2 GHz, and the HB may be about 2.3 GHz to about 2.7 GHz, but distinction of a frequency band is not limited thereto.

In an embodiment, the RFIC 320 may output an RF signal associated with a first SIM and/or a second SIM via at least one of a first RF path 321, a second RF path 323, or a third RF path 325. In an embodiment, an uplink signal (hereinafter, "UL signal") associated with the first SIM may be outputted via at least one RF path of the first RF path 321, the second RF path 323, or the third RF path 325. In an embodiment, a UL signal associated with the second SIM may be outputted via any one RF path of the first RF path 321, the second RF path 323, or the third RF path 325. In an embodiment, if the RFIC 320 includes a plurality of RFICs 222; 224; 226; 228 as in FIG. 2A or FIG. 2B, each transmission path may correspond to a respective RFIC operatively connected to an integrated communication processor (e.g., an integrated communication processor 260 in FIG. 2B). For example, a first transmission path may be a transmission path of an RF signal transmitted via the first RFIC 222, the first RFFE 232, and the first antenna module 242. A second transmission path may be a transmission path of an RF signal transmitted via the second RFIC 224, the second RFFE 234, and the second antenna module 244. A third transmission path may be a transmission path of an RF signal transmitted via the fourth RFIC 224 and the third antenna module 246. In the disclosure, the first transmission path, the second transmission path, or the third transmission path may a term for distinguishing a path via which an RF signal is transmitted, and is not limited to a path of an RF signal transmitted via specific elements in FIG. 2A, FIG. 2B, or FIG. 3.

In an embodiment, the communication processor 310 may be included in at least one of a processor 120 in FIG. 1A, a first communication processor 212 and a second communication processor 214 in FIG. 2A, or an integrated communication processor 260 in FIG. 2B. The communication processor 310 may include at least one communication processor configured to control at least a portion of the electronic device 101 to establish a transmission path of a UL signal associated with the first SIM and/or the second SIM. In an embodiment, the communication processor 310 may control an RF circuit to transmit the UL signal associated with the first SIM and/or the second SIM based on a UL MIMO mode and/or a UL SISO mode. In an embodiment, the UL MIMO mode may be an operation in which a UL signal is transmitted via a plurality of transmission paths. For example, the communication processor 310 may control the RF circuit so that a UL signal associated with the first SIM is transmitted via two transmission paths among the first RF path 321, the second RF path 323, or the third RF path 325 in the UL MIMO mode. The communication processor 310 may control the RF circuit so that a UL signal associated with the first SIM or the second SIM is transmitted via one transmission path among the first RF path 321, the second RF path 323, or the third RF path 325 in the UL SISO mode. In an embodiment, the RF circuit may mean a circuit including an RFFE and an antenna module electrically connected to the RFFE.

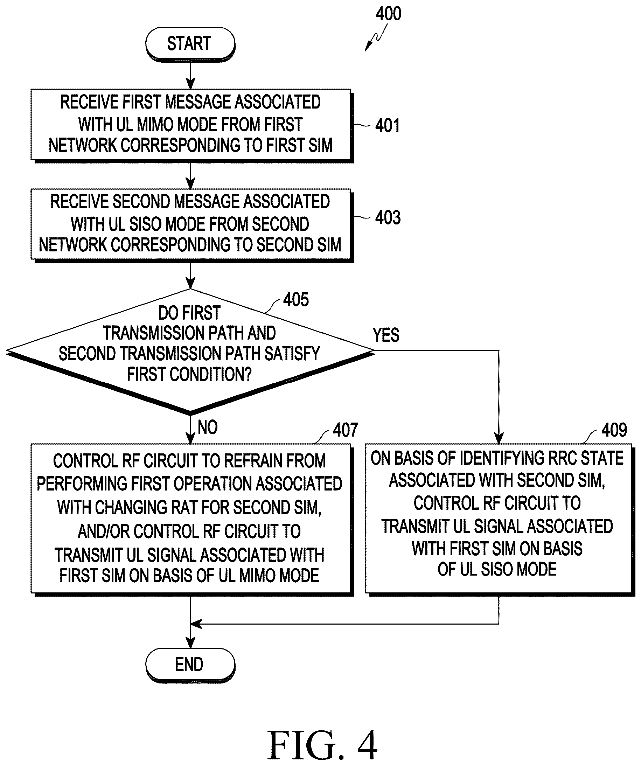

In an embodiment, the RF circuit may mean a circuit further including another element in addition to an RFFE (330a; 340a; 350a) and an antenna module (330b; 340b; 350b) illustrated in FIG. 3. In an embodiment, if the RFIC 320 includes the plurality of RFICs (222; 224; 226; 228) as illustrated in FIG. 2A or FIG. 2B, the RF circuit may mean a circuit including an RFIC, an RFFE electrically connected to the RFIC, and an antenna module electrically connected to the RFFE. An embodiment of an operation performed by at least one communication processor will be described below with reference to FIGS. 4 to 10.

Although the electronic device 101 is exemplified as including the communication processor 310, the RFIC 320, the plurality of RFFEs, and/or the plurality of antenna modules in FIG. 3, it is not limited thereto. For example, the electronic device 101 may further include at least one configuration. The electronic device 101 may further include at least one antenna module (not shown) for reception diversity (Rx diversity).

FIG. 4 illustrates a flowchart 400 illustrating an operating method of an electronic device according to an embodiment.

According to an embodiment, an electronic device (e.g., at least one of an electronic device 101 in FIG. 1A, an electronic device 101 in FIG. 1B, an electronic device 101 in FIG. 2A, or an electronic device 101 in FIG. 2B) (e.g., at least one of a processor 120 in FIG. 1A, a first communication processor 212 in FIG. 2A, a second communication processor 214 in FIG. 2A, an integrated communication processor 260 in FIG. 2B, or a communication processor 310 in FIG. 3) may, in operation 401, receive a first message associated with a UL MIMO mode from a first network corresponding to a first SIM. For example, the electronic device 101 may receive downlink control information (hereinafter, "DCI") from the first network supporting the UL MIMO mode and a UL SISO mode. In an embodiment, the electronic device 101 may report a UE capability associated with the UL MIMO mode to the first network, for example, via a physical uplink shared channel (PUSCH), before receiving DCI associated with the UL MIMO mode from the first network. The electronic device 101 may identify an operation mode associated with the first SIM based on the DCI received from the first network in response to the UE capability associated with the UL MIMO mode.

In an embodiment, the electronic device 101 may, in operation 403, receive a second message associated with the UL SISO mode from a second network corresponding to the second SIM. For example, the electronic device 101 may receive DCI from the second network supporting the UL SISO mode. In an embodiment, the electronic device 101 may report a UE capability associated with the UL SISO mode to the second network before receiving the DCI associated with the UL SISO mode from the second network. The electronic device 101 may identify an operation mode associated with the second SIM based on the DCI received from the second network in response to the UE capability associated with the UL SISO mode.

In an embodiment, the electronic device 101 may identify the first SIM based on identifying setting for a default data subscriber (DDS). In an embodiment, the electronic device 101 including the first SIM registered (or authenticated or connected) with the first network may operate in the UL MIMO mode or the UL SISO mode based on transmitting and receiving an RF signal via at least one RF circuit (or at least one antenna) included in the electronic device 101. The electronic device 101 including the second SIM registered (or authenticated or connected) with the second network may operate in the UL SISO mode based on transmitting and receiving an RF signal via at least one RF circuit (or at least one antenna) included in the electronic device 101, considering that relatively lower performance may be required compared to the first SIM. Settings of the first SIM and the second SIM may be changed from each other based on a user input. The electronic device 101 may update the UE capability based on identifying that the setting for the DDS has been changed. The electronic device 101 may report the updated UE capability to the first network and/or the second network based on the changed setting. The first SIM may be referred to as "DDS" and the second SIM may be referred to as "non-DDS", and there is no limitation on a name of a SIM. In an embodiment, the UL signal associated with the second SIM may be transmitted via any one of the plurality of transmission paths according to an event such as a DRX cycle (discontinuous reception paging cycle) or periodic signaling.

In an embodiment, the electronic device 101 may identify, based on receiving the first message and the second message, in operation 405, whether the first transmission path and the second transmission path satisfy a first condition. In an embodiment, the electronic device 101 may identify, based on DCI or a DCI format, whether an operation mode for transmitting and receiving the RF signal associated with the first SIM to and from the first network is the UL MIMO mode or the UL SISO mode. For example, the electronic device 101 may identify, based on identifying that pre-coding layer information included in the DCI is a first value via RRC signaling, that the operation mode for transmitting and receiving the RF signal associated with the first SIM to and from the first network is the UL MIMO mode. In an embodiment, the first value may be set to 2 corresponding to the number of transmission layers (tx layers) of the UL MIMO mode, and there is no limitation on a value corresponding to the pre-coding layer information. In an embodiment, the number of transmission layers or layers may be referred to as a rank. The electronic device 101 may identify, based on the DCI or the DCI format, whether an operation mode for transmitting and receiving the RF signal associated with the second SIM to and from the second network is the UL SISO mode. For example, based on identifying that the precoding layer information included in the DCI is a second value, the electronic device 101 may identify that the operation mode for transmitting and receiving the RF signal associated with the second SIM to and from the second network is the UL SISO mode. The second value may be set to 1 corresponding to the number of transmission layers of the UL SISO mode, and there is no limitation on a value corresponding to the precoding layer information.

In an embodiment, the electronic device 101 may identify whether a first transmission path corresponding to the RF signal associated with the first SIM and a second transmission path corresponding to the RF signal associated with the second SIM satisfy a condition associated with a transmission conflict (tx conflict) based on identifying that the operation mode for transmitting and receiving the RF signal associated with the first SIM to and from the first network is the UL MIMO mode and the operation mode for transmitting and receiving the RF signal associated with the second SIM is the UL SISO mode. In an embodiment, one transmission path may be distinguished from another transmission path by at least one RF component included on the transmission path. A first transmission path may be an RF path configured to transmit a UL signal associated with the first SIM. A second transmission path may be an RF path configured to transmit a UL signal associated with the second SIM. For example, the first transmission path may include a first RF path (e.g., a first RF path 321 in FIG. 3) and a second RF path (e.g., a second RF path 323 in FIG. 3). In an embodiment, if the RF signal associated with the second SIM is set to be transmitted via at least some of a transmission path corresponding to the RF signal associated with the first SIM, the second transmission path may be the first RF path 321 or the second RF path 323. In an embodiment, if the RF signal associated with the second SIM is set to be transmitted via a different transmission path which is distinct from the transmission path corresponding to the RF signal associated with the first SIM, the second transmission path may be a third RF path (e.g., a third RF path 325). In an embodiment, a number of the transmission path is for distinguishing a network corresponding to an RF component included on the transmission path and/or an RF signal transmitted and received via the transmission path, and an index corresponding to the transmission path may be changed according to an embodiment of the disclosure.

In an embodiment, the electronic device 101 may identify whether the condition is satisfied based on identifying whether at least some of a plurality of PAs corresponding to the first transmission path match a PA corresponding to the second transmission path. For example, the electronic device 101 may identify that the electronic device 101 is configured to transmit the UL signal associated with the first SIM via a second PA (e.g., a second PA 341 in FIG. 3) and a third PA (e.g., a third PA 351 in FIG. 3) in the UL MIMO mode. The electronic device 101 may identify that the electronic device 101 is configured to transmit the UL signal associated with the second SIM via the second PA 341 in the UL SISO mode. The electronic device 101 may identify that a condition associated with the transmission collision is satisfied based on identifying that the second PA 341 among the PAs corresponding to the first transmission path matches the second PA 341 corresponding to the second transmission path.

In an embodiment, the electronic device 101 may identify whether the condition is satisfied based on identifying whether at least some of the plurality of transmission paths corresponding to the first transmission path match the transmission path corresponding to the second transmission path. In an embodiment, the electronic device 101 may identify the transmission path of the UL signal associated with the first SIM and/or the second SIM set corresponding to a RAT and/or a frequency band. For example, the electronic device 101 may identify that the electronic device 101 is configured to transmit the UL signal associated with the first SIM via the second RF path (e.g., the second RF path 323 in FIG. 3) and the third RF path (e.g., the third PA 325 in FIG. 3) in the UL MIMO mode. The electronic device 101 may identify that the electronic device 101 is configured to transmit the UL signal associated with the second SIM via the second RF path 323 in the UL SISO mode. The electronic device 101 may identify that the condition associated with the transmission collision is satisfied based on identifying that the second RF path 323 among the transmission paths corresponding to the first transmission path match the second RF path 325 corresponding to the second transmission path.

In an embodiment, the electronic device 101 may identify whether there is a transmission collision based on a combination of RATs of the first network and the second network. For example, the electronic device 101 may identify that the condition associated with the transmission collision is satisfied based on identifying that the first network and the second network are 5G communication networks. The electronic device 101 may identify that the condition associated with the transmission collision is not satisfied based on identifying that the first network is the 5G communication network and the second network is an LTE communication network. The electronic device 101 may identify that the condition associated with the transmission collision is not satisfied based on identifying that the first network is the LTE communication network and the second network is the 5G communication network, and it will be understood by those skilled in the art that the condition associated with the transmission collision may not be limited to a combination of RATs. For example, a transmission path of a transmission signal corresponding to an RAT may be changed based on a setting of the electronic device 101. In an embodiment, in an embodiment, an operation of the electronic device 101 setting a transmission path of an RF signal used for a communication associated with the first SIM or the second SIM is not limited to setting a path of a transmission signal corresponding to any one of two SIMs. In an embodiment, the electronic device 101 may include one embedded UICC (eUICC), and a plurality of profiles may be installed in the one eUICC. For example, the plurality of profiles may include a first profile and a second profile. In an embodiment of the disclosure, the first SIM may mean the first profile, and the second SIM may mean the second profile. The electronic device 101 may perform a communication associated with the first SIM and/or the second SIM based on enabling the first profile and/or the second profile installed in the eUICC.

In an embodiment, based on identifying that the first transmission path and the second transmission path do not satisfy the first condition (Operation 405 - No), the electronic device 101 may, in operation 407, control the RF circuit to refrain from performing a first operation associated with a change of an RAT for the second SIM, and/or control the RF circuit to transmit the UL signal associated with the first SIM based on the UL MIMO mode.

In an embodiment, the first operation may include inter-RAT cell reselection and/or RAT fallback. In an embodiment, the electronic device 101 may restrict cell reselection from a second RAT corresponding to the second network to a first RAT corresponding to the first network for the second SIM. For example, the electronic device 101 may control the RF circuit to refrain from changing a serving cell from the LTE communication network to the 5G communication network for the second SIM if the first network corresponding to the first SIM is the 5G communication network. The electronic device 101 may also control the RF circuit to perform the RAT fallback from the 5G communication network to the LTE communication network for the second SIM. In an embodiment, the electronic device 101 may search for a neighbor cell based on performing cell measurement. For example, if a connection with the 5G communication network is established, the electronic device 101 may search for the neighbor cell based on a signal received from the LTE communication network. The electronic device 101 may perform RAT fallback associated with the second SIM based on requesting a handover to the LTE communication network from the 5G communication network. The electronic device 101 may control the UL signal associated with the first SIM to be transmitted based on the UL MIMO mode based on restricting the first operation for the second SIM.

In an embodiment, the electronic device 101 may, as at least part of restricting the first operation, restrict a measurement report for a measurement object in an RRC connected state of the second SIM.

In an embodiment, the electronic device 101 may perform cell reselection from the second RAT to the first RAT for the second SIM based on identifying that reception strength of a downlink signal (DL signal) associated with the second SIM is less than a fifth value. For example, if the first network corresponding to the first SIM is the 5G communication network, the electronic device 101 may perform inter-RAT cell reselection from the LTE communication network to the 5G communication network for the second SIM based on identifying that an RSSI of a downlink signal (DL signal) associated with the second SIM is less than a threshold value. In an embodiment, a parameter for the electronic device 101 to identify quality of a communication channel associated with the second SIM is not limited to a received signal strength indicator (RSSI). For example, the electronic device 101 may identify whether the communication channel associated with the second SIM is good or bad based on identifying reference signals received power (RSRP) or reference signal received quality (RSRQ) of the downlink signal. The electronic device 101 may control the RF circuit to transmit the UL signal associated with the first SIM based on the UL SISO mode based on performing the inter-RAT cell reselection for the second SIM.

In an embodiment, based on identifying that the first transmission path and the second transmission path satisfy the first condition (Operation 405 - Yes), the electronic device 101 may, in operation 409, control the RF circuit to transmit the UL signal associated with the first SIM based on the UL SISO mode, based on identifying an RRC state associated with the second SIM.

In an embodiment, based on identifying that the RRC state associated with the second SIM is the RRC connected state, the electronic device 101 may control the RF circuit to transmit the UL signal associated with the first SIM based on the UL SISO mode until the RRC state changes. Based on identifying that the RRC state associated with the second SIM is an RRC idle state, the electronic device 101 may control the RF circuit to transmit the UL signal associated with the first SIM based on the UL MIMO mode if cell reselection is possible. For example, a case that the cell reselection is possible may be a case that reselection is possible to a cell in which a collision does not occur in a transmission path of RF signals of the first SIM and the second SIM based on a system information block (SIB).

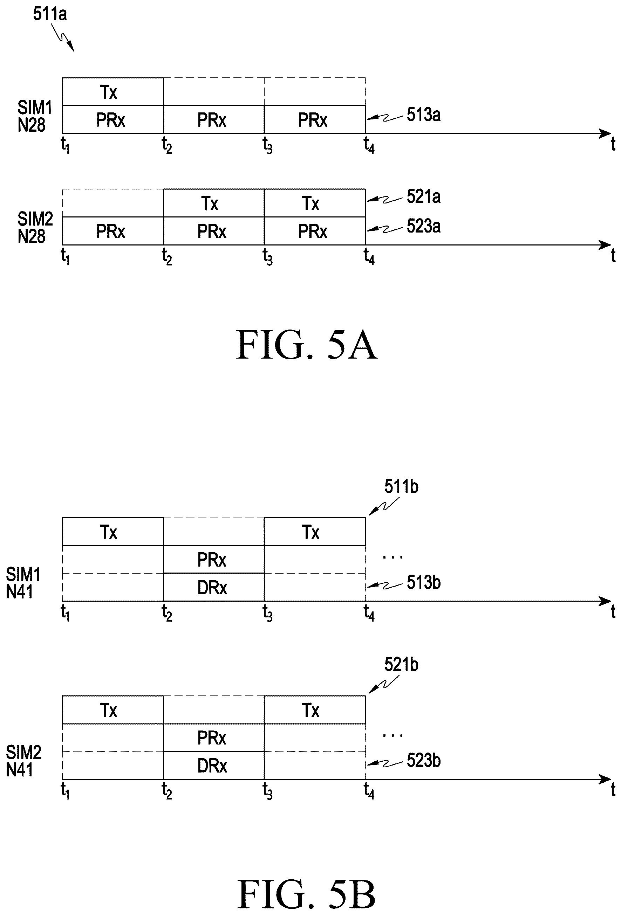

FIG. 5A is a diagram for explaining an operation based on a DSDA mode of an electronic device according to an embodiment.

FIG. 5B is a diagram for explaining an operation based on a DSDA mode of an electronic device according to an embodiment.

In an embodiment, referring to FIG. 5A, an electronic device 101 may transmit a UL signal associated with a first SIM and/or a second SIM based on transmission sharing (tx sharing). The electronic device 101 may transmit (511a) a UL signal associated with the first SIM of an N28 band during t₁ to t₂. The electronic device 101 may transmit (521a) a UL signal associated with the second SIM of the N28 band during t₂ to t₄ based on sharing a transmission path corresponding to the UL signal associated with the first SIM. The electronic device 101 may receive (513a) a DL signal associated with the first SIM of the N28 band during t₁ to t₄. The electronic device 101 may receive (523a) a DL signal associated with the first SIM of the N28 band during t₁ to t₄. A frequency band corresponding to an operation of the electronic device 101 to transmit and receive an RF signal based on transmission sharing is not limited to FIG. 5A.

In an embodiment, referring to FIG. 5B, an electronic device 101 may transmit a UL signal associated with a first SIM and/or a second SIM at least simultaneously based on two independent transmission paths. The electronic device 101 may transmit (511b) a UL signal associated with the first SIM of an N41 band during t₁ to t₂ and t₃ and t₄. The electronic device 101 may transmit (521b) a UL signal associated with the second SIM of the N41 band during t₁ to t₂ and t₃ to t₄ based on a transmission path different from the transmission path of the UL signal associated with the first SIM. The electronic device 101 may receive (513b) a DL signal associated with the first SIM of the N41 band during t₂ to t₃. The electronic device 101 may receive (523a) a DL signal associated with the second SIM of the N41 band during t2 to t3. A frequency band corresponding to an operation of the electronic device 101 to transmit and receive an RF signal based on an independent transmission path is not limited to FIG. 5B.

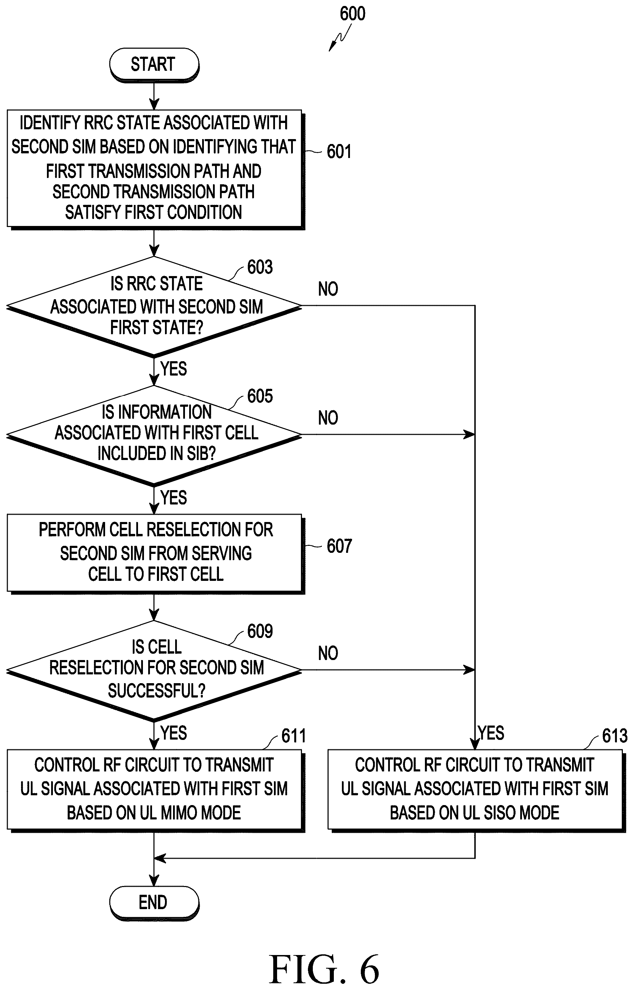

FIG. 6 illustrates a flow chart 600 of an operating method of an electronic device according to an embodiment.

According to an embodiment, an electronic device (e.g., at least one of an electronic device 101 in FIG. 1A, an electronic device 101 in FIG. 1B, an electronic device 101 in FIG. 2A, or an electronic device 101 in FIG. 2B) (e.g., at least one of a processor 120 in FIG. 1A, a first communication processor 212 in FIG. 2A, a second communication processor 214 in FIG. 2A, an integrated communication processor 260 in FIG. 2B, or a communication processor 310 in FIG. 3) may, in operation 601, identify an RRC state associated with a second SIM based on identifying that a first transmission path and a second transmission path satisfy a first condition. In an embodiment, if the RRC state associated with the second SIM is an RRC connected state, a specific cell providing a network communication service associated with the second SIM may be referred to as a "serving cell."

In an embodiment, based on identifying the RRC state associated with the second SIM, the electronic device 101 may, in operation 603, identify whether the RRC state associated with the second SIM is a first state. For example, the electronic device 101 may identify whether a state associated with the second SIM is an RRC idle state.

In an embodiment, based on identifying that the RRC state associated with the second SIM is the first state (Operation 603 - Yes), the electronic device 101 may, in operation 605, identify whether information associated with the first cell is included in a system information block (SIB). In an embodiment, the electronic device 101 may identify a neighbor cell list and/or an RAT list based on the SIB received from the second network. The electronic device 101 may identify whether cell reselection to the first cell is possible so as not to satisfy a condition associated with a transmission collision.

In an embodiment, based on identifying that the information associated with the first cell is included in the SIB (Operation 605 - Yes), the electronic device 101 may, in operation 607, perform cell reselection for the second SIM from the serving cell to the first cell. The electronic device 101 may, based on identifying that the information associated with the first cell is included in the SIB, perform the cell reselection for the second SIM from the serving cell corresponding to the second network to the first cell. In an embodiment, the electronic device 101 may perform the cell reselection to the first cell based on lowering a priority associated with selection of the serving cell and raising a priority associated with selection of the first cell. In an embodiment, an operation of the electronic device 101 performing cell reselection based on changing priorities between frequencies may be referred to as "RAT de-prioritization." In an embodiment, the electronic device 101 may perform the cell reselection to the first cell based on RAT fallback.

In an embodiment, based on performing the cell reselection for the second SIM to the first cell, the electronic device 101 may identify whether the cell reselection for the second SIM is successful in operation 609. In an embodiment, the electronic device 101 may identify that the cell reselection is successful based on receiving a message associated with an RRC connection from the second network.

In an embodiment, based on identifying that the cell reselection for the second SIM is successful (Operation 609 - Yes), the electronic device 101 may control the RF circuit to transmit a UL signal associated with the first SIM based on a UL MIMO mode in operation 611.

In an embodiment, the electronic device 101 may control the RF circuit to transmit the UL signal associated with the first SIM based on a UL SISO mode in operation 613.

In an embodiment, based on identifying that the RRC state associated with the second SIM is not the first state (Operation 603 - No), the electronic device 101 may control the RF circuit to transmit the UL signal associated with the first SIM based on the UL SISO mode.

In an embodiment, based on identifying that the information associated with the first cell is not include in the SIB (Operation 605 - No), the electronic device 101 may control the RF circuit to transmit the UL signal associated with the first SIM based on the UL SISO mode.

In an embodiment, based on identifying that the cell reselection for the second SIM has failed (Operation 609 - No), the electronic device 101 may control the RF circuit to transmit the UL signal associated with the first SIM based on the UL SISO mode.

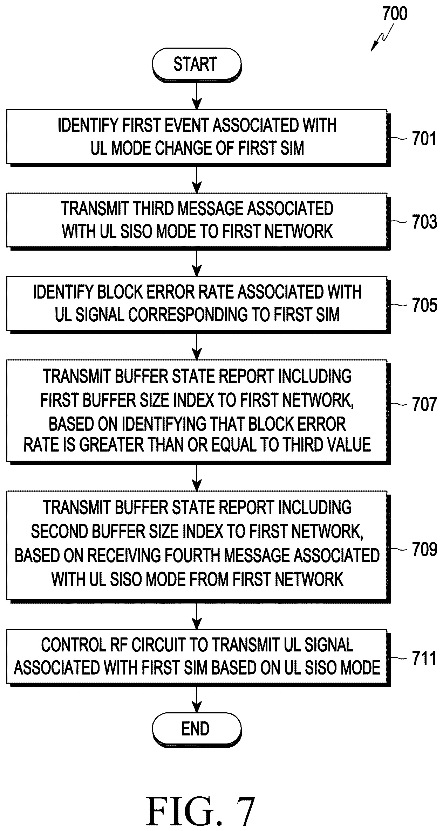

FIG. 7 illustrates a flow chart 700 of an operating method of an electronic device according to an embodiment.

According to an embodiment, an electronic device (e.g., at least one of an electronic device 101 in FIG. 1A, an electronic device 101 in FIG. 1B, an electronic device 101 in FIG. 2A, or an electronic device 101 in FIG. 2B) (e.g., at least one of a processor 120 in FIG. 1A, a first communication processor 212 in FIG. 2A, a second communication processor 214 in FIG. 2A, an integrated communication processor 260 in FIG. 2B, or a communication processor 310 in FIG. 3) may, in operation 701, identify a first event associated with a UL mode change of a first SIM.

In an embodiment, based on identifying the first event associated with the UL mode change of the first SIM, the electronic device 101 may, in operation 703, transmit a third message associated with a UL SISO mode to a first network.

In an embodiment, based on transmitting the third message associated with the UL SISO mode to the first network, the electronic device 101 may, in operation 705, identify a block error rate (BLER) associated with a UL signal corresponding to the first SIM.

In an embodiment, the electronic device 101 may transmit a buffer state report (BSR) including a first buffer size index to the first network based on identifying that the identified block error rate is greater than or equal to a third value in operation 707. In an embodiment, the electronic device 101 may relatively reduce the risk of a radio link failure (RLF) based on setting a buffer size index to a minimum. The first buffer size index may be, for example, 0, and a specific value of the first buffer size index set to a minimum is not limited to the example described above. The electronic device 101 may notify the first network that there is no uplink data to transmit based on transmitting the BSR including the first buffer size index to the first network before the number of transmission layers is changed from 2 to 1.

In an embodiment, based on transmitting the buffer state report including the first buffer size index to the first network, the electronic device 101 may, in operation 709, transmit a buffer state report including a second buffer size index to the first network based on receiving a fourth message associated with the UL SISO mode from the first network. In an embodiment, the electronic device 101 may transmit UL data within a buffer based on setting a buffer size index to a maximum based on identifying that a precoding layer is changed to 1. The electronic device 101 may transmit uplink data accumulated in the buffer to the first network based on transmitting the BSR including the second buffer size index to the first network after the number of transmission layers is changed from 2 to 1.

In an embodiment, based on transmitting the UL data within the buffer, the electronic device 101 may control the RF circuit to transmit a UL signal associated with the first SIM based on the UL SISO mode in operation 711. In an embodiment, the electronic device 101 may control the RF circuit to transmit the UL signal based on the UL SISO mode until a condition in which the UL signal associated with the first SIM may be transmitted based on the UL MIMO mode is satisfied. For example, the electronic device 101 may control the RF circuit to transmit the UL signal based on the UL SISO mode based on obtaining a message associated with the UL MIMO mode from the first network.

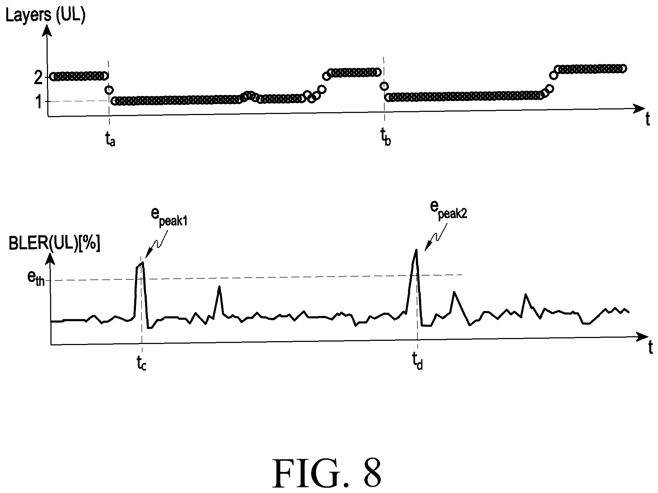

FIG. 8 is a diagram for explaining an operation of identifying an increase in a block error rate of an electronic device according to an embodiment. In an embodiment, an electronic device 101 may identify that a block error rate increases above a threshold value (eₜₕ) based on changing a transmission layer to 1.

In an embodiment, referring to FIG. 8, if the number of transmission paths of a UL signal associated with a first SIM needs to be changed to one, an electronic device 101 may change a layer associated with transmission of the UL signal associated with the first SIM from 2 to 1 at time tₐ. For example, a case that the number of the transmission paths of the UL signal associated with the first SIM needs to be changed to one may include a case that an event occurs that requires an electronic device 101 to transmit and/or receive an RF signal associated with a second SIM while transmitting the UL signal associated with the first SIM based on a UL MIMO mode. After changing the layer corresponding to the UL signal associated with the first SIM to 1, the electronic device 101 may report, to a first network corresponding to the first SIM, the number of layers as 1 via a PUSCH. In an embodiment, if a delay associated with reception of a signal including a change in resource allocation from the first network occurs, the electronic device 101 may identify that a block error rate (eₚₑₐₖ₁) at t_{c} increases above a threshold value (eₜₕ). In an embodiment, t_{c} may be after about 1 second has elapsed from tₐ, and there is no limitation on a specific numerical value. In an embodiment, the electronic device 101 may change the number of layers from 2 to 1 at t_{b} after changing the layer associated with the transmission of the UL signal associated with the first SIM from 1 to 2. The electronic device 101 may identify that the block error rate (epeak1) increases above the threshold value (eₜₕ) at t_{d} after about 1 second has elapsed from t_{b}. In an embodiment, the electronic device 101 may transmit a buffer state report to the first network so that the block error rate does not rapidly increase above the threshold value, as described in FIG. 7. The electronic device 101 may relatively reduce the risk of occurrence of a radio link failure (RLF) and decrease uplink block error rate (uplink BLER) based on limiting an index value of a BSR transmitted to the first network.

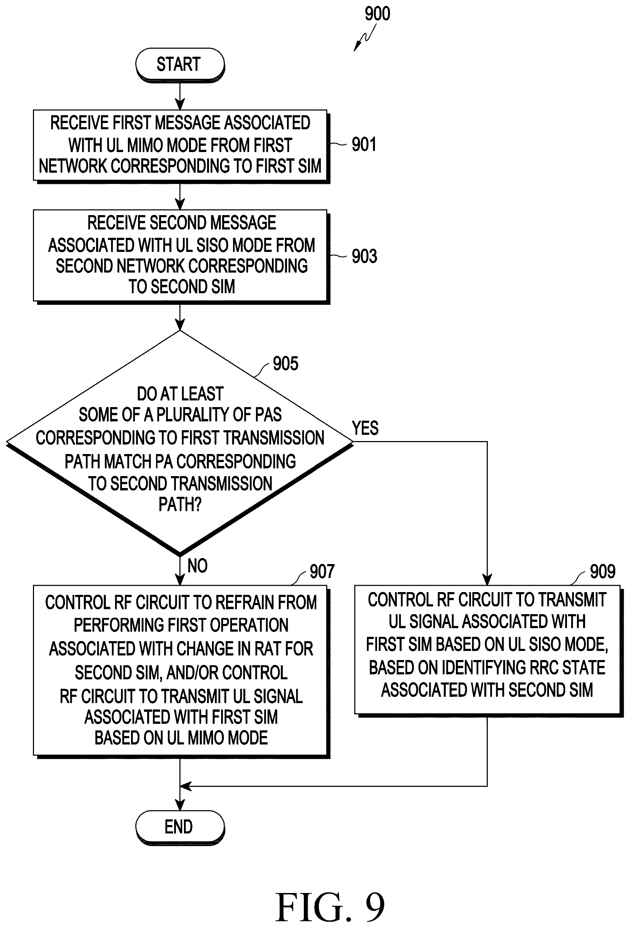

FIG. 9 illustrates a flow chart 900 of an operating method of an electronic device according to an embodiment.

According to an embodiment, an electronic device (e.g., at least one of an electronic device 101 in FIG. 1A, an electronic device 101 in FIG. 1B, an electronic device 101 in FIG. 2A, or an electronic device 101 in FIG. 2B) (e.g., at least one of a processor 120 in FIG. 1A, a first communication processor 212 in FIG. 2A, a second communication processor 214 in FIG. 2A, an integrated communication processor 260 in FIG. 2B, or a communication processor 310 in FIG. 3) may, in operation 901, receive a first message associated with a UL MIMO mode from a first network corresponding to a first SIM. Operation 901 is at least partially the same as or similar to operation 401, so a description overlapping with operation 401 may not be repeated.

In an embodiment, the electronic device 101 may, in operation 903, receive a second message associated with a UL SISO mode from a second network corresponding to a second SIM. Since operation 903 is at least partially the same as or similar to operation 403, so a description overlapping with operation 403 may not be repeated.

In an embodiment, based on receiving the first message and the second message, the electronic device 101 may, in operation 905, identify whether at least some of a plurality of PAs corresponding to a first transmission path match a PA corresponding to a second transmission path.

In an embodiment, the electronic device 101 may identify whether the condition is satisfied based on identifying whether the at least some of the plurality of PAs corresponding to the first transmission path match the PA corresponding to the second transmission path. For example, the electronic device 101 may identify that the electronic device 101 is configured to transmit a UL signal associated with the first SIM via a second PA (e.g., a second PA 341 in FIG. 3) and a third PA (e.g., a third PA 351 in FIG. 3) in the UL MIMO mode. The electronic device 101 may identify that the electronic device 101 is configured to transmit the UL signal associated with the second SIM via the second PA 341 in the UL SISO mode. The electronic device 101 may identify that a condition associated with a transmission collision is satisfied based on identifying that the second PA 341 among the PAs corresponding to the first transmission path matches the second PA 341 corresponding to the second transmission path.

In an embodiment, based on identifying that the plurality of PAs corresponding to the first transmission path are different from the PA corresponding to the second transmission path (Operation 905 - No), the electronic device 101 may, in operation 907, control the RF circuit to refrain from performing a first operation associated with a change in an RAT for the second SIM, and/or control the RF circuit to transmit the UL signal associated with the first SIM based on the UL MIMO mode.

In an embodiment, based on identifying that the at least some of the plurality of PAs corresponding to the first transmission path match the PA corresponding to the second transmission path (Operation 905 - Yes), the electronic device 101 may, in operation 909, control the RF circuit to transmit the UL signal associated with the first SIM based on the UL SISO mode, based on identifying an RRC state associated with the second SIM.

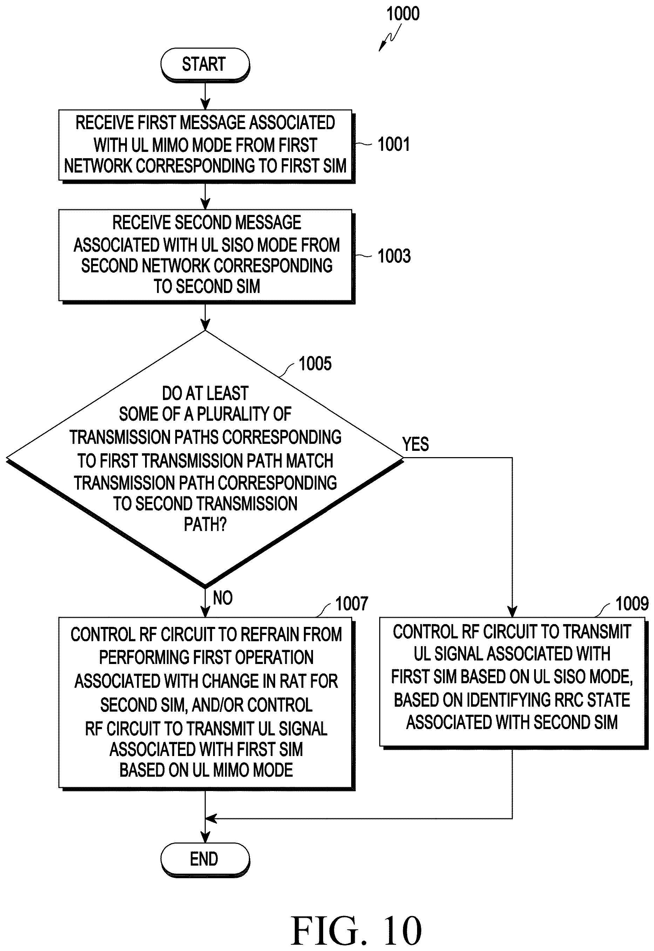

FIG. 10 illustrates a flow chart 1000 of an operating method of an electronic device according to an embodiment.

According to an embodiment, an electronic device (e.g., at least one of an electronic device 101 in FIG. 1A, an electronic device 101 in FIG. 1B, an electronic device 101 in FIG. 2A, or an electronic device 101 in FIG. 2B) (e.g., at least one of a processor 120 in FIG. 1A, a first communication processor 212 in FIG. 2A, a second communication processor 214 in FIG. 2A, an integrated communication processor 260 in FIG. 2B, or a communication processor 310 in FIG. 3) may, in operation 1001, receive a first message associated with a UL MIMO mode from a first network corresponding to a first SIM. Operation 1001 is at least partially the same as or similar to operation 401, so a description overlapping with operation 401 may not be repeated.

In an embodiment, the electronic device 101 may, in operation 1003, receive a second message associated with a UL SISO mode from a second network corresponding to a second SIM. Operation 1003 is at least partially the same as or similar to operation 403, so a description overlapping with operation 403 may not be repeated.

In an embodiment, the electronic device 101, based on receiving the first message and the second message, may, in operation 1005, identify whether at least some of a plurality of transmission paths corresponding to a first transmission path match a transmission path corresponding to a second transmission path.

In an embodiment, the electronic device 101 may identify whether the condition is satisfied based on identifying whether the at least some of the plurality of transmission paths corresponding to the first transmission path match the transmission path corresponding to the second transmission path. In an embodiment, the electronic device 101 may identify a transmission path set corresponding to an RAT and/or a frequency band. For example, the electronic device 101 may identify that the electronic device 101 is configured to transmit a UL signal associated with the first SIM via a second RF path (e.g., a second RF path 323 in FIG. 3) and a third RF path (e.g., a third PA 325 in FIG. 3) in the UL MIMO mode. The electronic device 101 may identify that the electronic device 101 is configured to transmit the UL signal associated with the second SIM via the second RF path 323 in the UL SISO mode. The electronic device 101 may identify that a condition associated with a transmission collision is satisfied based on identifying that the second RF path 323 among transmission paths corresponding to the first transmission path match the second RF path 325 corresponding to the second transmission path.

In an embodiment, based on identifying that a plurality of transmission paths corresponding to the first transmission path are different from the transmission path corresponding to the second transmission path (Operation 1005 - No), the electronic device 101 may, in operation 1007, control an RF circuit to refrain from performing a first operation associated with a change in an RAT for the second SIM, and control the RF circuit to transmit the UL signal associated with the first SIM based on the UL MIMO mode.

In an embodiment, based on identifying that the plurality of transmission paths corresponding to the first transmission path match the transmission path corresponding to the second transmission path (Operation 1005 - Yes), the electronic device 101 may, in operation 1009, control the RF circuit to transmit the UL signal associated with the first SIM based on the UL SISO mode, based on identifying an RRC state associated with the second SIM.

In an embodiment, an electronic device (101) may comprise at least one communication processor (120; 212; 214; 260; 310) configured to be connected to a first subscriber identity module (SIM) and a second SIM, a radio frequency (RF) circuit, and memory (130) storing instructions.

In an embodiment, the instructions, when executed by the at least one communication processor (120; 212; 214; 260; 310), cause the electronic device (101) to receive a first message associated with a UL MIMO mode from a first network corresponding to the first SIM.

In an embodiment, the instructions, when executed by the at least one communication processor (120; 212; 214; 260; 310), cause the electronic device (101) to receive a second message associated with a UL SISO mode from a second network corresponding to the second SIM.

In an embodiment, the instructions, when executed by the at least one communication processor (120; 212; 214; 260; 310), cause the electronic device (101) to, based on the received first message and second message, identify whether a first transmission path set for the first SIM and a second transmission path set for the second SIM satisfy a first condition.

In an embodiment, the instructions, when executed by the at least one communication processor (120; 212; 214; 260; 310), cause the electronic device (101) to, based on identifying that the first transmission path and the second transmission path do not satisfy the first condition, control the RF circuit to refrain from performing a first operation associated with a change of an RAT for the second SIM, and control the RF circuit to transmit a UL signal associated with the first SIM based on a UL MIMO mode.

In an embodiment, the instructions, when executed by the at least one communication processor (120; 212; 214; 260; 310), cause the electronic device (101) to, based on identifying that the first transmission path and the second transmission path satisfy the first condition, identify an RRC state associated with the second SIM.

In an embodiment, the instructions, when executed by the at least one communication processor (120; 212; 214; 260; 310), cause the electronic device (101) to, based on identifying that the RRC state associated with the second SIM is a first state, identify whether information associated with a first cell is included in an SIB received from the second network.

In an embodiment, the instructions, when executed by the at least one communication processor (120; 212; 214; 260; 310), cause the electronic device (101) to, based on identifying that the information associated with the first cell is included in the SIB, perform cell reselection for the second SIM from a serving cell corresponding to the second network to the first cell.

In an embodiment, the instructions, when executed by the at least one communication processor (120; 212; 214; 260; 310), cause the electronic device (101) to, based on performing the cell reselection for the second SIM to the first cell, control the RF circuit to transmit the UL signal associated with the first SIM based on a UL MIMO mode.

In an embodiment, the instructions, when executed by the at least one communication processor (120; 212; 214; 260; 310), may cause the electronic device (101) to, based on identifying that the cell reselection for the second SIM from the serving cell corresponding to the second network to the first cell has failed, control the RF circuit to transmit the UL signal associated with the first SIM based on a UL SISO mode.

In an embodiment, the instructions, when executed by the at least one communication processor (120; 212; 214; 260; 310), may cause the electronic device (101) to, based on identifying that the RRC state associated with the second SIM is a second state, control the RF circuit to transmit the UL signal associated with the first SIM based on a UL SISO mode until an RRC state associated with the second SIM changes to a first state.

In an embodiment, the instructions, when executed by the at least one communication processor (120; 212; 214; 260; 310), may cause the electronic device (101) to, as at least part of, based on identifying that the RRC state associated with the second SIM is the second state, controlling the RF circuit to transmit the UL signal associated with the first SIM based on the UL SISO mode until the RRC state associated with the second SIM changes to the first state, transmit a third message associated with a UL MIMO mode to the first network.

In an embodiment, the instructions, when executed by the at least one communication processor (120; 212; 214; 260; 310), may cause the electronic device (101) to, based on identifying that a block error rate associated with a UL signal corresponding to the first SIM is greater than or equal to a third value before receiving a fourth message associated with a UL SISO mode from the first network in response to the third message, transmit a buffer status report including a first buffer size index to the first network.

In an embodiment, the instructions, when executed by the at least one communication processor (120; 212; 214; 260; 310), may cause the electronic device (101) to, based on receiving the fourth message associated with the UL SISO mode from the first network in response to the third message, transmit a buffer status report including a second buffer size index to the first network.

In an embodiment, the instructions, when executed by the at least one communication processor (120; 212; 214; 260; 310), may cause the electronic device (101) to, as at least part of, based on identifying that the first transmission path and the second transmission path do not satisfy the first condition, control the RF circuit to refrain from performing the first operation associated with the change of the RAT for the second SIM, restrict cell reselection from a second RAT corresponding to the second network to a first RAT corresponding to the first network for the second SIM.

In an embodiment, the instructions, when executed by the at least one communication processor (120; 212; 214; 260; 310), may cause the electronic device (101) to, based on identifying that reception strength of a DL signal associated with the second SIM is less than a fifth value, perform the cell reselection from the second RAT to the first RAT for the second SIM.

In an embodiment, the instructions, when executed by the at least one communication processor (120; 212; 214; 260; 310), may cause the electronic device (101) to, based on performing the cell reselection from the second RAT to the first RAT for the second SIM, control the RF circuit to transmit the UL signal associated with the first SIM based on a UL SISO mode.

In an embodiment, the instructions, when executed by the at least one communication processor (120; 212; 214; 260; 310), may be further configured to cause the electronic device

(101) to report a UE capability associated with UL MIMO to the first network before receiving a first message associated with a UL MIMO mode from the first network. The at least one communication processor (120; 212; 214; 260; 310) may cause a UE capability associated with UL SISO to be reported to the second network before receiving a second message associated with a UL SISO mode from the second network.

The instructions, when executed by the at least one communication processor (120; 212; 214; 260; 310), cause the electronic device (101) to, as at least part of, based on the received first message and second message, identifying whether the first transmission path set for the first SIM and the second transmission path set for the second SIM satisfy the first condition, based on identifying that precoding layer information included in the first message is a first value and precoding layer information included in the second message is a second value, identify whether the first transmission path and the second transmission path satisfy the first condition.

In an embodiment, the first condition may include that at least some of a plurality of power amplifiers (PAs) corresponding to the first transmission path match a PA corresponding to the second transmission path.

In an embodiment, the first condition may include that some of a plurality of transmission path numbers corresponding to the first transmission path match a transmission path number corresponding to the second transmission path.

According to an embodiment, a method may comprise receiving a first message associated with a UL MIMO mode from a first network corresponding to a first SIM.

In an embodiment, the method may comprise receiving a second message associated with a UL SISO mode from a second network corresponding to a second SIM.

In an embodiment, the method may comprise, based on the received first message and second message, identifying whether a first transmission path set for the first SIM and a second transmission path set for the second SIM satisfy a first condition.

In an embodiment, the method may comprise, based on identifying that the first transmission path and the second transmission path do not satisfy the first condition, controlling an RF circuit to refrain from performing a first operation associated with a change of an RAT for the second SIM, and controlling the RF circuit to transmit a UL signal associated with the first SIM based on a UL MIMO mode.

In an embodiment, the method may further comprise, based on identifying that the first transmission path and the second transmission path satisfy the first condition, identifying an RRC state associated with the second SIM.

In an embodiment, the method may further comprise, based on identifying that the RRC state associated with the second SIM is a first state, identifying whether information associated with a first cell is included in an SIB received from the second network.

In an embodiment, the method may further comprise, based on identifying that the information associated with the first cell is included in the SIB, performing cell reselection for the second SIM from a serving cell corresponding to the second network to the first cell.

In an embodiment, the method may further comprise, based on performing the cell reselection for the second SIM to the first cell, control the RF circuit to transmit the UL signal associated with the first SIM based on a UL MIMO mode.

In an embodiment, the method may comprise restricting cell reselection from a second RAT corresponding to the second network to a first RAT corresponding to the first network for the second SIM within controlling the RF circuit to refrain from performing the first operation associated with the change of the RAT for the second SIM based on identifying that the first transmission path and the second transmission path do not satisfy the first condition.

In an embodiment, the method may further comprise reporting a UE capability associated with UL MIMO to the first network before receiving a first message associated with a UL MIMO mode from the first network.

In an embodiment, the method may further comprise reporting a UE capability associated with UL SISO to the second network before receiving a second message associated with a UL SISO mode from the second network.

In an embodiment, the method may comprise, based on identifying that precoding layer information included in the first message is a first value and precoding layer information included in the second message is a second value, identifying whether the first transmission path and the second transmission path satisfy the first condition within identifying whether the first transmission path set for the first SIM and the second transmission path set for the second SIM satisfy the first condition based on the received first message and second message.

In an embodiment, a storage medium storing at least one computer-readable instruction may be provided.

In an embodiment, the at least one instruction, when executed by at least one communication processor (120; 212; 214; 260; 310) of an electronic device (101), may cause the electronic device to perform at least one operation.

In an embodiment, the at least one operation may comprise an operation of receiving a first message associated with an uplink (UL) multiple-input multiple-output (MIMO) mode from a first network corresponding to a first subscriber identity module (SIM).

In an embodiment, the at least one operation may comprise an operation of receiving a second message associated with a UL single-input single-output (SISO) mode from a second network corresponding to a second SIM.

In an embodiment, the at least one operation may comprise an operation of, based on the received first message and second message, identifying whether a first transmission path set for the first SIM and a second transmission path set for the second SIM satisfy a first condition.

In an embodiment, the at least one operation may comprise an operation of, based on identifying that the first transmission path and the second transmission path do not satisfy the first condition, controlling a radio frequency (RF) circuit to refrain from performing a first operation associated with a change of a radio access technology (RAT) for the second SIM, and/or controlling the RF circuit to transmit a UL signal associated with the first SIM based on a UL MIMO mode.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to an embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
at least one communication processor (120; 212; 214; 260; 310) configured to be connected to a first subscriber identity module (SIM) and a second SIM;
a radio frequency (RF) circuit; and
memory (130) storing instructions that, when executed by the at least one communication processor (120; 212; 214; 260; 310), cause the electronic device (101) to:
receive a first message associated with an uplink (UL) multiple-input multiple-output (MIMO) mode from a first network corresponding to the first SIM,
receive a second message associated with a UL single-input single-output (SISO) mode from a second network corresponding to the second SIM,
based on the received first message and second message, identify whether a first transmission path set for the first SIM and a second transmission path set for the second SIM satisfy a first condition, and
based on identifying that the first transmission path and the second transmission path do not satisfy the first condition, control the RF circuit to refrain from performing a first operation associated with a change of a radio access technology (RAT) for the second SIM, and/or control the RF circuit to transmit a UL signal associated with the first SIM based on the UL MIMO mode.

2. The electronic device (101) of claim 1, wherein the instructions, when executed by the at least one communication processor (120; 212; 214; 260; 310), cause the electronic device (101) to:
based on identifying that the first transmission path and the second transmission path satisfy the first condition, identify a radio resource control (RRC) state associated with the second SIM.

3. The electronic device (101) of claim 1 or 2, wherein the instructions, when executed by the at least one communication processor (120; 212; 214; 260; 310), cause the electronic device (101) to:
based on identifying that the RRC state associated with the second SIM is a first state, identify whether information associated with a first cell is included in a system information block (SIB) received from the second network,
based on identifying that the information associated with the first cell is included in the SIB, perform cell reselection for the second SIM from a serving cell corresponding to the second network to the first cell, and
based on performing the cell reselection for the second SIM to the first cell, control the RF circuit to transmit the UL signal associated with the first SIM based on a UL MIMO mode.

4. The electronic device (101) of any one of claims 1 to 3, wherein the instructions, when executed by the at least one communication processor (120; 212; 214; 260; 310), cause the electronic device (101) to:
based on identifying that the cell reselection for the second SIM from the serving cell corresponding to the second network to the first cell has failed, control the RF circuit to transmit the UL signal associated with the first SIM based on a UL SISO mode.

5. The electronic device (101) of any one of claims 1 to 4, wherein the instructions, when executed by the at least one communication processor (120; 212; 214; 260; 310), cause the electronic device (101) to:
based on identifying that the RRC state associated with the second SIM is a second state, control the RF circuit to transmit the UL signal associated with the first SIM based on a UL SISO mode until a radio resource control (RRC) state associated with the second SIM changes to a first state.

6. The electronic device (101) of any one of claims 1 to 5, wherein the instructions, when executed by the at least one communication processor (120; 212; 214; 260; 310), cause the electronic device (101) to, as at least part of, based on identifying that the RRC state associated with the second SIM is the second state, controlling the RF circuit to transmit the UL signal associated with the first SIM based on the UL SISO mode until the radio resource control (RRC) state associated with the second SIM changes to the first state:
transmit a third message associated with a UL MIMO mode to the first network.

7. The electronic device (101) of any one of claims 1 to 6, wherein the instructions, when executed by the at least one communication processor (120; 212; 214; 260; 310), cause the electronic device (101) to:
based on identifying that a block error rate associated with a UL signal corresponding to the first SIM is greater than or equal to a third value before receiving a fourth message associated with a UL SISO mode from the first network in response to the third message, transmit a buffer status report including a first buffer size index to the first network.

8. The electronic device (101) of any one of claims 1 to 7, wherein the instructions, when executed by the at least one communication processor (120; 212; 214; 260; 310), cause the electronic device (101) to:
based on receiving the fourth message associated with the UL SISO mode from the first network in response to the third message, transmit a buffer status report including a second buffer size index to the first network.

9. The electronic device (101) of any one of claims 1 to 8, wherein the instructions, when executed by the at least one communication processor (120; 212; 214; 260; 310), cause the electronic device (101) to, as at least part of, based on identifying that the first transmission path and the second transmission path do not satisfy the first condition, control the RF circuit to refrain from performing the first operation associated with the change of the radio access technology (RAT) for the second SIM:
restrict cell reselection from a second RAT corresponding to the second network to a first RAT corresponding to the first network for the second SIM.

10. The electronic device (101) of any one of claims 1 to 9, wherein the instructions, when executed by the at least one communication processor (120; 212; 214; 260; 310), cause the electronic device (101) to:
based on identifying that reception strength of a downlink (DL) signal associated with the second SIM is less than a fifth value, perform the cell reselection from the second RAT to the first RAT for the second SIM, and
based on performing the cell reselection from the second RAT to the first RAT for the second SIM, control the RF circuit to transmit the UL signal associated with the first SIM based on a UL SISO mode.

11. The electronic device (101) of any one of claims 1 to 10, wherein the instructions, when executed by the at least one communication processor (120; 212; 214; 260; 310), cause the electronic device (101) to:
report a UE capability associated with UL MIMO to the first network before receiving a first message associated with a UL MIMO mode from the first network, and
report a UE capability associated with UL SISO to the second network before receiving a second message associated with a UL SISO mode from the second network.

12. The electronic device (101) of any one of claims 1 to 11, wherein the instructions, when executed by the at least one communication processor (120; 212; 214; 260; 310), cause the electronic device (101) to, as at least part of, based on the received first message and second message, identifying whether the first transmission path set for the first SIM and the second transmission path set for the second SIM satisfy the first condition:
based on identifying that precoding layer information included in the first message is a first value and precoding layer information included in the second message is a second value, identify whether the first transmission path and the second transmission path satisfy the first condition.

13. The electronic device (101) of any one of claims 1 to 12,
wherein the first condition includes at least one of:
a condition in which at least some of a plurality of power amplifiers (PAs) corresponding to the first transmission path match a PA corresponding to the second transmission path, or
a condition in which some of a plurality of transmission path numbers corresponding to the first transmission path match a transmission path number corresponding to the second transmission path.

14. A method comprising:
receiving a first message associated with an uplink (UL) multiple-input multiple-output (MIMO) mode from a first network corresponding to a first subscriber identity module (SIM);
receiving a second message associated with a UL single-input single-output (SISO) mode from a second network corresponding to a second SIM;
based on the received first message and second message, identifying whether a first transmission path set for the first SIM and a second transmission path set for the second SIM satisfy a first condition; and
based on identifying that the first transmission path and the second transmission path do not satisfy the first condition, controlling a radio frequency (RF) circuit to refrain from performing a first operation associated with a change of a radio access technology (RAT) for the second SIM, and/or controlling the RF circuit to transmit a UL signal associated with the first SIM based on a UL MIMO mode.

15. A storage medium storing at least one computer-readable instruction, wherein the at least one instruction, when executed by at least one communication processor (120; 212; 214; 260; 310) of an electronic device (101), causes the electronic device to perform at least one operation, and
wherein the at least one operation comprises:
an operation of receiving a first message associated with an uplink (UL) multiple-input multiple-output (MIMO) mode from a first network corresponding to a first subscriber identity module (SIM),
an operation of receiving a second message associated with a UL single-input single-output (SISO) mode from a second network corresponding to a second SIM,
an operation of, based on the received first message and second message, identifying whether a first transmission path set for the first SIM and a second transmission path set for the second SIM satisfy a first condition, and
an operation of, based on identifying that the first transmission path and the second transmission path do not satisfy the first condition, controlling a radio frequency (RF) circuit to refrain from performing a first operation associated with a change of a radio access technology (RAT) for the second SIM, and/or controlling the RF circuit to transmit a UL signal associated with the first SIM based on a UL MIMO mode.
